# EUROPEAN PATENT APPLICATION

(11) **EP 4 692 744 A1**
(43) Date of publication of application: **11.02.2026**
(21) Application number: 24193413.2
(22) Date of filing: 07.08.2024
(51) Int. Cl.: G01L 1/24, G01L 5/166, G01L 11/02

(54) **READOUT CIRCUITRY FOR A PRESSURE SENSING SYSTEM**

(71) Applicant: Koninklijke Philips N.V., 5656 AG Eindhoven (NL)
(72) Inventor: WIRTZ, Daniel, Eindhoven (NL); WIEMKER, Rafael, Eindhoven (NL); VAN EE, Raymond, 5656AG Eindhoven (NL); KRUEGER, Sascha, Eindhoven (NL); SENEGAS, Julien Thomas, Eindhoven (NL)
(74) Representative: Philips Intellectual Property & Standards

(57) **Abstract**

Pressure sensing systems which use intersecting optical waveguides as pressure sensors suffer from limited signal-to-noise ratio (SNR) due to the influence of background light. Disclosed is readout circuitry (105) for such a pressure sensing system (100). The readout circuitry comprises at least one light source (114) and at least one light detector (118), wherein the at least one light source is connectable to at least one first optical waveguide (108) in the pressure sensing system, and wherein the at least one light detector is connectable to at least one second optical waveguide (110). The readout circuitry is configured to control the at least one light source to inject forward signals into the at least one first optical waveguide and to acquire return signals from the at least one second optical waveguide using the at least one light detector. The readout circuitry is further configured to control the at least one light source to implement pulsation of the forward signals and to synchronize acquisition of the return signals by the at least one light detector with the pulsation of the forward signals. By pulsing signals in this manner, the readout circuitry enhances SNR by drastically improving suppression of background light.

## Description

### FIELD OF THE INVENTION

The invention relates to readout circuitry for a pressure sensing system, and to a pressure sensing system comprising the readout circuitry.

### BACKGROUND OF THE INVENTION

Pressure sensing systems which rely on the use of optical fibers as the sensor, such as that described in WO 2017/144675 A1, have been used for monitoring patient motion. Conventionally, the pressure sensing system is operated using continuous wave (CW) visible light that is emitted by LEDs into the fibers and read out after coupling to the orthogonal set of fibers. This mode of operation provides a signal that is proportional to the amount of light coupled from sending to receiving fibers, which in turn is a measure of pressure exerted on the fiber crosspoints. However, the available signal-to-noise ratio (SNR) is limited since the assembly is prone to the influence of stray light. Rigorous optical shielding is necessary to guarantee optimum operation and signal integrity. These aspects hamper or at least complicate the usability of the system in e.g. a clinical setting.

### SUMMARY OF THE INVENTION

To better address one or more of these concerns, there is provided, in a first aspect, readout circuitry for a pressure sensing system.

The pressure sensing system comprises an optical waveguide pressure sensor array. The optical waveguide pressure sensor array comprises at least one first resiliently deformable optical waveguide and at least one second resiliently deformable optical waveguide, wherein the at least one first optical waveguide intersects the at least one second optical waveguide to define an array comprising at least one crosspoint. The optical waveguide pressure sensor array further comprises a light coupling structure configured to permit inter-waveguide light coupling at the at least one crosspoint when pressure is applied to the at least one crosspoint, wherein the extent of the light coupling depends on the applied pressure. The at least one crosspoint thereby serves as a pressure sensor.

The readout circuitry comprises at least one light source and at least one light detector, wherein the at least one light source is connectable to the at least one first optical waveguide, and wherein the at least one light detector is connectable to the at least one second optical waveguide. The at least one light source may comprise a light-emitting diode (LED) or a (semiconductor) laser diode and the at least one light detector may comprise a photodiode but it will be appreciated that other implementations of these components are feasible.

The readout circuitry is configured to control the at least one light source to inject forward signals into the at least one first optical waveguide and to acquire return signals from the at least one second optical waveguide using the at least one light detector. The readout circuitry is further configured to control the at least one light source to implement pulsation of the forward signals and to synchronize acquisition of the return signals by the at least one light detector with the pulsation of the forward signals.

The readout circuitry may be configured to implement pulsation of the forward signals using a selected value of at least one pulsation parameter, and to synchronize acquisition of the return signals by the at least one light detector with the pulsation of the forward signals by tuning the at least one light detector to the selected pulsation parameter value. In particular, the pulsation parameter value may be selected for providing increased or maximum signal-to-noise ratio (SNR) in the return signals and/or in the pressure signals deduced from the return signals. The at least one pulsation parameter may comprise one or more of the following: pulse width; duty cycle; pulse frequency; pulse pattern; pulse shape (e.g., rectangular pulses or gaussian shaped pulses). Boundaries on pulsation parameter values may be given for practical reasons: a lower bound may be defined by overlap with physiological frequencies, thus at least several Hz should be feasible. An upper bound may be given by component capability. Selection of pulsation parameter may be application-specific. For example, duty cycle may be chosen to fit the application: for higher frequencies a lower duty cycle is feasible (in order to average over at least a few signal periods) while for lower frequencies a somewhat higher DC may be necessary for the same reason.

The readout circuitry may be configured to implement dynamic adjustment of the pulsation parameter value. Dynamic adjustment of the pulsation parameter value may comprise carrying out a sweep over a range of pulsation parameter values and selecting the value associated with the optimal SNR. Dynamic adjustment may be performed in response to occurrence of a trigger condition. The trigger condition may comprise detection of motion, for example patient motion, that is, detection of motion of a patient currently interacting with the pressure sensing system. Thus, the readout circuitry may be configured to implement motion-triggered dynamic adjustment of the pulsation parameter value. Motion may be detected by a motion sensor. Detection of motion may occur during bulk motion events, such as the patient coughing, and so on. The motion sensor may comprise the pressure sensing system itself and/or an external sensor such as a camera. In an example, if the quality of a breathing signal obtained using the pressure sensing system deteriorates (e.g. due to bulk motion of the patient), this may be used to trigger adjustment of the pulsation parameter value in order to counter the signal decline. Performing dynamic adjustment of the pulsation parameter value in this way effectively provides a mechanism for feedback loop control of the pulsation parameter value for optimum performance.

The readout circuitry may be configured to implement pulsation of the forward signals using multiple different pulsation frequencies, in a heterofrequent or multifrequency approach. The readout circuitry may be configured to use multiple different pulsation frequencies for frequency tagging of the forward signals. The readout circuitry may be configured to use different pulsation frequencies for different regions of the optical waveguide pressure sensor array. The readout circuitry may be configured to implement pulsation of the forward signals that are injected into a first region of the optical waveguide pressure sensor array using a first pulsation frequency and to implement pulsation of the forward signals that are injected into a second region of the optical waveguide pressure sensor array using a second pulsation frequency, wherein the first and second pulsation frequencies are different, and wherein the first and second regions are at least partially non-overlapping.

The readout circuitry may be configured to implement pulsation of the forward signals using a predetermined pulse pattern, and to reject those return signals acquired by the at least one light detector which do not match the pulse pattern.

The readout circuitry may be configured to implement pulsation of the forward signals using a frequency hopping scheme. Using the frequency hopping scheme, the readout circuitry may be configured to implement pulsation of the forward signals during a first time window using a first pulsation frequency and to implement pulsation of the forward signals during a second time window using a second pulsation frequency, wherein the first and second pulsation frequencies are different, the readout circuitry being configured to reject return signals acquired by the at least one light detector which do not exhibit a pulsation frequency matching the time window in which they were acquired.

The readout circuitry may be configured to utilize lock-in detection to synchronize acquisition of the return signals by the at least one light detector with the pulsation of the forward signals. Additionally or alternatively, the readout circuitry may be configured to use boxcar integration to synchronize acquisition of the return signals by the at least one light detector with the pulsation of the forward signals.

The at least one light source may configured to emit monofrequent or low bandwidth light. The at least one light source may be configured to emit near- or mid-IR light. The at least one light source may be configured to emit light at multiple different frequencies. The at least one light source may be configured to emit light at multiple different frequencies for frequency tagging of the forward signals. In the case that the optical waveguide pressure sensor array comprises a plurality of first optical waveguides, the readout circuitry may comprise a plurality of light sources configured to inject light at different frequencies into different regions of the optical waveguide pressure sensor array via the plurality of first optical waveguides. The light sources may be configured to inject light at a first frequency into a first region of the optical waveguide pressure sensor array and to inject light at a second frequency into a second region of the optical waveguide pressure sensor array, wherein the first and second regions are at least partially non-overlapping.

In a variant to the readout circuitry of the first aspect, rather than the pulsation features, that is, the readout circuity being configured to control the at least one light source to implement pulsation of the forward signals and to synchronize acquisition of the return signals by the at least one light detector with the pulsation of the forward signals, the at least one light source of the readout circuitry is configured to emit near- or mid-IR light, as described elsewhere herein. The at least one light source may be configured in other respects as described elsewhere herein.

In a second aspect, there is provided a pressure sensing system comprising the readout circuitry of the first aspect and the optical waveguide pressure sensor array.

In the pressure sensing system of the second aspect, the optical waveguide pressure sensor array may be a first optical waveguide pressure sensor array, with the pressure sensing system further comprising a second optical waveguide pressure sensor array at least partially overlaying the first optical waveguide pressure sensor array. The first optical waveguide pressure sensor array and the second optical waveguide pressure sensor array may have different spatial resolutions. The readout circuitry may be configured to employ a first pulsation frequency or a first light frequency in the first optical waveguide pressure sensor array and to employ a second pulsation frequency or a second light frequency in the second optical waveguide pressure sensor array. The pressure sensing system may further comprise optical shielding, wherein the optical shielding consists of a fabric, for example.

In a third aspect, there is provided a method of reading out signals from the pressure sensing system. The method comprises controlling the at least one light source to inject forward signals into the at least one first optical waveguide and using the at least one light detector to acquire return signals from the at least one second optical waveguide. The return signals may be subsequently processed to derive pressure signals therefrom. In an example, the method further comprises controlling the at least one light source to implement pulsation of the forward signals and synchronizing acquisition of the return signals by the at least one light detector with the pulsation of the forward signals.

In a fourth aspect, there is provided a method for monitoring patient state in connection with a medical procedure, the method comprising obtaining pressure signals from the readout circuitry of the first aspect and processing the pressure signals to monitor patient state. The method of the fourth aspect may be performed by the patient state monitoring system as described herein. The medical procedure may comprise a diagnostic imaging procedure. The diagnostic imaging procedure may comprise a magnetic resonance imaging procedure, a computed tomography imaging procedure, an X-ray imaging procedure, or an ultrasound procedure. The medical procedure may comprise an interventional procedure. The interventional procedure may comprise catheterization or surgery. The medical procedure may comprise a therapeutic procedure. The therapeutic procedure may comprise radiotherapy, physical therapy, or substance administration. The medical procedure may comprise any combination of procedures such as those identified herein. The method of the fourth aspect may be performed to monitor patient state during the medical procedure, prior to the medical procedure, and/or following the medical procedure.

Monitoring patient state may comprise detecting patient motion. Detecting patient motion may comprise detecting patient respiratory activity. Detecting patient motion may comprise detecting patient cardiac activity. Detecting patient motion may comprise detecting patient cardiorespiratory activity.

In the case that the medical procedure comprises an image acquisition process in combination with a treatment process, the method of the fourth aspect may further comprise, in response to detecting patient motion, controlling an imaging system performing the image acquisition process to suspend or stop irradiation. The pressure signals can be used to inform the MRI acquisition system which shots contain excessive motion and which therefore need to be retaken without repeating the whole scan.

The patient state monitored on the basis of the pressure signals may be used in image reconstruction. More particularly, the monitored patient state may be used to determine which images are to be used in image reconstruction and/or to determine weights to be attached to images for use in image reconstruction. For example, during breathing, an organ of interest can be in a different position. For good image quality, multiple shots of the organ in exactly the same position may be needed. The pressure signals may be used to determine which shots of each breathing phase are similar in 3D space so as to sort or group corresponding shots to form one still image per breathing phase (in a process commonly referred to as binning).

By monitoring patient state during medical imaging in the manner described herein, image quality can be improved and the efficiency of radiotherapy of moving organs increased. Image quality can be improved for example by determining and accounting for motion artifacts caused by the patient's movement, respiration, and/or heartbeat.

In a fifth aspect, there is provided a computing system configured to perform the method of the fourth aspect.

In a sixth aspect, there is provided a computer program comprising instructions which, when executed by a computing system, enable or cause the computing system to perform the method of the third aspect.

In a seventh aspect, there is provided a computer-readable medium comprising instructions which, when executed by a computing system, enable or cause the computing system to perform the method of the third aspect. The computer-readable medium may be transitory or non-transitory, volatile or non-volatile.

As used herein, the term "patient" refers to the human or animal subject of a pressure sensing examination and does not necessarily imply ill health. The term may be replaced with "user", as appropriate.

The term "patient motion" may be understood in terms of a deviation in patient position between two or more different timepoints. "Detecting patient motion" as described herein may thus comprise obtaining pressure signals corresponding to different timepoints and detecting patient motion based on differences between the pressure signals corresponding respectively to the different timepoints. To that end, the pressure signals may be obtained continuously, periodically, or repetitively. In this way, detecting patient motion may comprise tracking patient position. The pressure signals may thus comprise both spatial and temporal data, i.e. spatiotemporal data. The pressure signals may thus be used to obtain a static or dynamic occupancy pressure distribution whereby patient state including patient position and/or patient motion may be detected.

As used herein, the term "medical imaging" refers to the process of imaging at least part of the interior or exterior of the subject for clinical analysis and medical intervention, and may comprise techniques such as radiography, magnetic resonance imaging, ultrasound, computed tomography, and so on.

The term "circuitry", as used herein, may comprise, for example, singly or in any combination, hardwired circuitry, programmable circuitry such as computer processors comprising one or more individual instruction processing cores, state machine circuitry, and/or firmware that stores instructions executed by programmable circuitry.

The term "obtaining", as used herein, may encompass, for example, receiving from another system, device, or process; loading or retrieving from storage or memory; measuring or capturing using sensors or other data acquisition circuitry.

The term "determining", as used herein, may encompass calculating, computing, processing, deriving, investigating, resolving, selecting, choosing, ascertaining, establishing, looking up (e.g., looking up in a table, a database or another data structure), receiving (e.g., receiving information), accessing (e.g., accessing data in a memory), and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
FIG. 1 is a schematic diagram of a pressure sensing system;
FIG. 2 schematically illustrates a lock-in amplifier used for acquisition of return signals in the pressure sensing system of FIG. 1;
FIG. 3 illustrates the principle of operation of boxcar integration used for acquisition of return signals in the pressure sensing system of FIG. 1; and
FIG. 4 illustrates distribution of solar energy by wavelength.

### DETAILED DESCRIPTION OF EMBODIMENTS

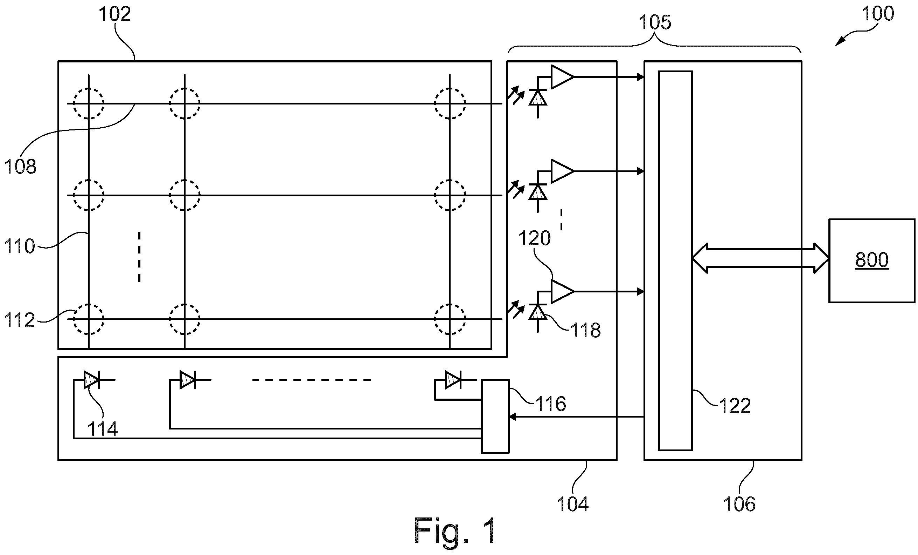

FIG. 1 is a schematic diagram of a pressure sensing system 100. The pressure sensing system 100 comprises an optical waveguide pressure sensor array 102, together with associated readout circuitry 105 comprising optoelectronic circuitry 104 and data acquisition and control circuitry 106.

The optical waveguide pressure sensor array 102 comprises a plurality of row optical waveguides, such as that indicated at 108, and a plurality of column optical waveguides, such as that indicated at 110. The optical waveguides 108, 110 preferably comprise polymer or plastic optical fibers (POF). The row optical waveguides 108 and the column optical waveguides 110 are deformable and are arranged in a planar array or matrix to define a sensor at each crosspoint, such as that indicated at 112. Each crosspoint 112 thus includes one of the row optical waveguides 108 in contact with one of the column optical waveguides 110 at the intersection of those two waveguides. Each crosspoint 112 may further comprise a light coupling structure (not shown) configured to enhance waveguide bending when pressure is applied to the crosspoint 112. The light coupling structure may comprise at least one layer of mechanical light scattering material disposed in contact with at least one of the row or column optical waveguides 108, 110. The light coupling structures may be applied on both sides of the row and column optical waveguides 108, 110, and may have a layer of light scattering material either on one side, or on both sides. In one non-limiting example, each row optical waveguide 108 includes a waveguide core surrounded by a waveguide cladding, and each column optical waveguide 110 includes a waveguide core surrounded by a waveguide cladding, wherein the waveguide claddings of both the row optical waveguides 108 and the column optical waveguides 110 are arranged for light transmissive contact at one or more of the crosspoints 112. The cladding is sufficiently thin that a non-negligible amount of light may be coupled from the core of one waveguide to the crossing waveguide. At an increased ratio between cross-sectional diameter of the core to the cladding, the light has a higher tendency to couple into the crossing waveguide.

The optoelectronic circuitry 104 comprises a plurality of LEDs 114, with each LED 114 being connected to a respective column optical waveguide 110 to inject forward signals thereinto. The column optical waveguides 110 thereby serve as transmitting waveguides. A selector 116 is configured to enable selective activation of the LEDs 114 by the data acquisition and control circuitry 106. The optoelectronic circuitry 104 further comprises a plurality of photodiodes 118, each coupled to a respective row optical waveguide 108 to acquire return signals therefrom. The row optical waveguides 108 thus serve as receiving optical waveguides. It will however be understood that the column optical waveguides 110 may alternatively serve as the receiving optical waveguides and that the row optical waveguides 108 may serve as the transmitting optical waveguides. The optoelectronic circuitry 104 further comprises a plurality of amplifiers 120 for amplifying the return signals acquired by respective photodiodes 118. The amplified return signals are output to the data acquisition and control circuitry 106.

The data acquisition and control circuitry 106 controls the LEDs 114 and the selector 116 and acquires the return signals from the photodiodes 118. To that end, the data acquisition and control circuitry 106 comprises interface circuitry 122 for interfacing with the optoelectronic circuitry 104. The interface circuitry 122 may comprise one or more analog-to-digital converts for converting the analog return signals output by the amplifiers 120 to digital pressure signals. The digital pressure signals may then be output to a patient state monitoring system 800 for further processing. The patient state monitoring system 800 may be configured to perform one or more preprocessing operations, such as resizing, orienting, scaling, filtering, segmenting, reducing noise, and so on, for rendering the pressure signals more suitable for the further processing operations.

Conventionally, the readout circuitry 105 is operated in continuous-wave (CW) mode, with the LEDs 114 emitting visible light that is inserted into the fibers 110 and read out after coupling to the orthogonal set of fibers 108. This mode of operation makes the system 100 prone to the influence of environmental stray light. The available signal-to-noise ratio (SNR) increases proportionally to the amount of light coupled into the receiving fibers 108, given that the amount of environmental stray light stays constant. Increased stray light pickup directly affects the SNR. Optical shielding is thus necessary in order to guarantee optimum operation and signal integrity.

Proposed herein are various improvements to the readout circuitry 105 for increasing SNR while reducing sensitivity to environmental light. In a first embodiment, by pulsing the LEDs with an e.g. rectangular waveform of a certain frequency and by synchronizing the detection accordingly (e.g. using a lock-in amplifier, which is sensitive to signals of a chosen frequency), sensitivity increases significantly. Background signals can be decreased to insignificant levels using proper pulse frequencies, resulting in eased optical shielding requirements. In a second embodiment, using near- or mid-IR light instead of visible light further decreases vulnerability to background illumination and thus increases available SNR. The first and second embodiments may be employed individually or combined, so as to switch operation from continuous wave (CW) visible light to pulsed, preferably monofrequent or low bandwidth light.

### Pulsed light

In the first embodiment, values of various pulsation parameters such as pulse shapes and repetition frequencies are selected for providing one or more of the following advantages :-
- increased SNR by drastically improved suppression of background light;
- at the same time, the reduced duty-cycle allows higher pulse powers within thermal and otherwise safe limits, again leading to higher SNR;
- pulse repetition time and pulse width are selected from a wide range of parameter values for optimum performance;
- The need for optical shielding may be obsolete altogether.

### Selection of pulsation frequency

The pulsation frequency is selected from a wide range since suitable semiconductor components are available with allow for frequencies up to MHz.

### Dynamic adaptation of pulsation parameter values

In an example, a feedback loop is effectively created by constantly or repeatedly adjusting the values of pulsation parameters such as the pulsation frequency/pulse width in order to distinguish from environmental and/or patient-produced signals. Particularly in the case of periodic signals like breathing or cardiac rhythm, the feedback loop additionally enhances performance.

### Use of multiple pulsation frequencies

In an example, the readout circuitry 105 simultaneously employs two fixed frequencies of pulsable monofrequent light sources to provide a frequency tag to the signals in the optical waveguide pressure sensor array 102. In an example, the two frequencies are injected respectively into two such overlaying optical waveguide pressure sensor arrays 102, each with different spatial resolution.

### Pulse pattern

In another embodiment, not a single monofrequent pulse is used, but a predetermined pulse pattern (of a certain length smaller than the sampling time resolution required). The readout circuitry 105 rejects stray signals which do not match the injected pulse pattern.

### Frequency hopping

In an example, the readout circuitry 105 changes the used frequency window regularly over time (frequency hopping), such that if a return signal is received within the correct frequency window but in the incorrect time window, it is filtered out as noise.

### Receiving electronics

The readout circuitry 105 is configured to detect regularly pulsed signals. To this end, it may utilize lock-in detection or boxcar integration for return signal acquisition. Both implementations provide drastically increased sensitivity: while the return signal is only detected at the chosen pulsation frequency, the noise floor can be subtracted.

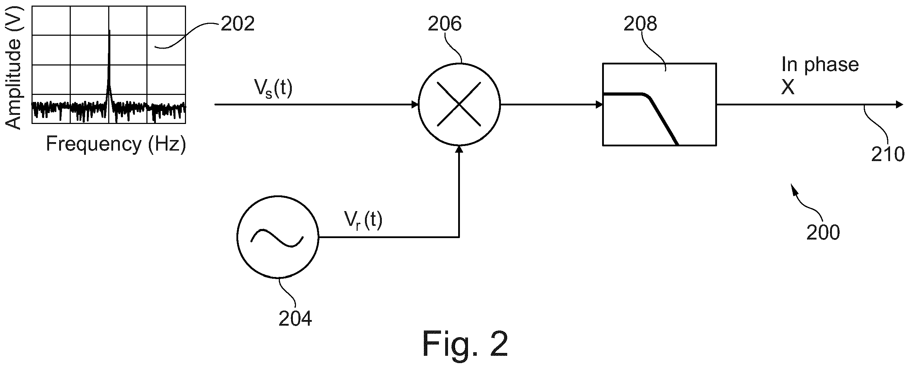

FIG. 2 schematically illustrates a lock-in amplifier 200 used for acquisition of the return signals. The lock-in amplifier multiplies the return signal 202 with a reference signal 204 using a multiplier 206 and then applies an adjustable lowpass filter 208 to the multiplied signal in order to isolate the signal 210 at the frequency of interest from all other frequency components.

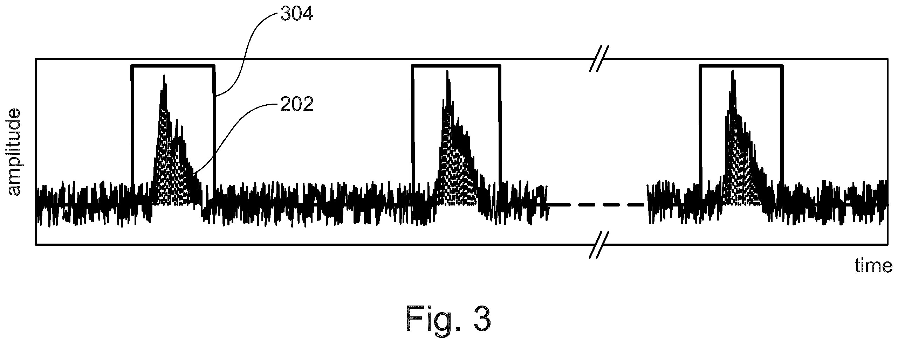

FIG. 3 illustrates the principle of operation of a boxcar integrator used for acquisition of the return signals. The return signal 204 is integrated over the gate width of the boxcar function 304 and then averaged over multiple integration results, thereby facilitating time-domain based selection of signal parts that carry information of interest while neglecting signal parts where only noise is present.

### Non-visible light

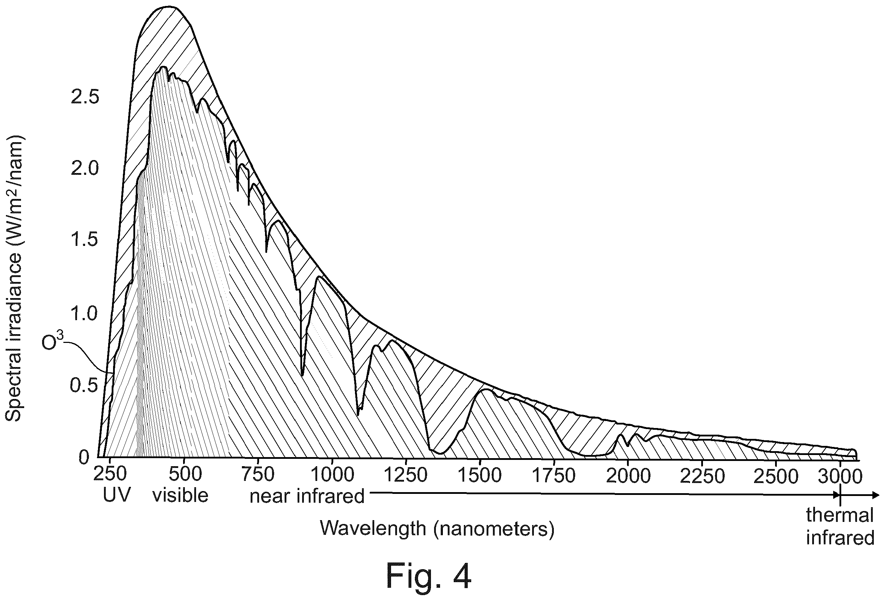

In the second embodiment, the operating wavelength is moved from visible to near-IR (wavelengths from 700-1500nm, e.g. around 1300nm) or mid-IR (wavelengths beyond 1500nm) for increased sensitivity. Assuming thermal equilibrium, the intensity of background radiation at IR-wavelengths is significantly reduced compared to visible wavelengths, as shown in FIG. 4, thus easing shielding requirements. By moving from visible wavelengths to infrared, the irradiance by the surroundings is reduced by an order of magnitude, resulting in significantly relaxed shielding requirements even in the case of daylight illumination. Furthermore, the white light LEDs which are typically used in clinical settings to provide ambient light emit very little IR relative to the visible light they emit. What remains as environmental stray light is essentially the thermal emission of the surroundings, at e.g. 1.3µm, which are small compared to the LED IR output as well as the detected signal after coupling to the receiving fiber.

### Adapted shielding

Reduced shielding requirements result from the arrangements described herein, since the relative intensity of ambient background signals is significantly reduced. The tight cover foil typically used to encase the array 102 may be replaced by (optionally shielded) cloth, which may in turn improve patient comfort.

Apart from the use of the pressure sensing system 100 in conjunction with medical imaging, the increased robustness of using specifically chosen light frequencies may be particularly advantageous for home-care devices. The pressure sensing system 100 may be embodied as a sense-mattress (that is, as thin and unobtrusive underneath bed linen) measure acoustic body emittances and detect resonance and transmittance frequency patterns typical for obstructive sleep apnea (OSA) events, establishing a time-log of events through the night for medical appraisal.

Various functions described herein can be implemented in hardware, software, or any combination thereof. If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. Readout circuitry (105) for a pressure sensing system (100), the pressure sensing system comprising an optical waveguide pressure sensor array (102), the optical waveguide pressure sensor array comprising at least one first resiliently deformable optical waveguide (108) and at least one second resiliently deformable optical waveguide (110), wherein the at least one first optical waveguide intersects the at least one second optical waveguide to define an array comprising at least one crosspoint (112), the optical waveguide pressure sensor array further comprising a light coupling structure configured to permit inter-waveguide light coupling at the at least one crosspoint when pressure is applied to the at least one crosspoint, wherein the extent of the light coupling depends on the applied pressure, the at least one crosspoint thereby serving as a pressure sensor;
the readout circuitry comprising at least one light source (114) and at least one light detector (118), wherein the at least one light source is connectable to the at least one first optical waveguide, and wherein the at least one light detector is connectable to the at least one second optical waveguide, wherein the readout circuitry is configured to control the at least one light source to inject forward signals into the at least one first optical waveguide and to acquire return signals from the at least one second optical waveguide using the at least one light detector,
wherein the readout circuitry is further configured to control the at least one light source to implement pulsation of the forward signals and to synchronize acquisition of the return signals by the at least one light detector with the pulsation of the forward signals.

2. Readout circuitry as claimed in claim 1, configured to implement pulsation of the forward signals using a selected value of at least one pulsation parameter, and to synchronize acquisition of the return signals by the at least one light detector (118) with the pulsation of the forward signals by tuning the at least one light detector to the selected pulsation parameter value.

3. Readout circuitry as claimed in claim 1 or 2, configured to implement dynamic adjustment of the pulsation parameter value.

4. Readout circuitry as claimed in claim 3, wherein dynamic adjustment of the pulsation parameter value comprises carrying out a sweep over a range of pulsation parameter values and selecting the value associated with the optimal signal-to-noise ratio.

5. Readout circuitry as claimed in claim 4, configured to implement dynamic adjustment in response to detection of motion of a patient interacting with the pressure sensing system (100).

6. Readout circuitry as claimed in any preceding claim, configured to implement pulsation of the forward signals using multiple different pulsation frequencies for frequency tagging of the forward signals.

7. Readout circuitry as claimed in claim 6, configured to use different pulsation frequencies for different regions of the optical waveguide pressure sensor array (102).

8. Readout circuitry as claimed in any preceding claim, configured to implement pulsation of the forward signals using a predetermined pulse pattern and to reject those return signals acquired by the at least one light detector (118) which do not match the pulse pattern.

9. Readout circuitry as claimed in any preceding claim, configured to implement pulsation of the forward signals using a frequency hopping scheme.

10. Readout circuitry as claimed in any preceding claim, configured to use lock-in detection or boxcar integration to synchronize acquisition of the return signals by the at least one light detector (118) with the pulsation of the forward signals.

11. Readout circuitry as claimed in any preceding claim, wherein the at least one light source (114) is configured to emit monofrequent or low bandwidth light.

12. Readout circuitry as claimed in claim 11, wherein the at least one light source (114) is configured to emit near- or mid-IR light.

13. Readout circuitry as claimed in claim 11 or 12, wherein the at least one light source (114) is configured to emit light at multiple different frequencies for frequency tagging of the forward signals.

14. Readout circuitry as claimed in claim 13, wherein the optical waveguide pressure sensor array (102) comprises a plurality of first optical waveguides (108), the readout circuitry comprising a plurality of light sources (114) configured to inject light at different frequencies into different regions of the optical waveguide pressure sensor array via the plurality of first optical waveguides.

15. A pressure sensing system (100) comprising the readout circuitry (105) as claimed in any preceding claim and the optical waveguide pressure sensor array (102).
